(19) **Europäisches Patentamt**
**European Patent Office**
**Office européen des brevets**

(11) **EP 2 810 733 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(51) Int Cl.:
*B23K 9/29* *(2006.01)*     *B23K 9/173* *(2006.01)*
*B23K 9/12* *(2006.01)*     *B23K 9/10* *(2006.01)*

(21) Anmeldenummer: **14001686.6**

(22) Anmeldetag: **13.05.2014**

(54) **Verfahren zum Metallschutzgasschweißen**

Method for welding metal using protective gas

Procédé de soudage sous gaz protecteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2013 DE 102013009350**
**28.11.2013 DE 102013018065**

(43) Veröffentlichungstag der Anmeldung:
**10.12.2014 Patentblatt 2014/50**

(73) Patentinhaber: **Linde Aktiengesellschaft**
**80331 München (DE)**

(72) Erfinder: **Siewert, Erwan**
**80802 München (DE)**

(56) Entgegenhaltungen:
**DE-A1- 2 619 306     DE-U1-212004 000 048**
**JP-A- H10 244 371     US-A- 5 994 659**

EP 2 810 733 B1

**Beschreibung**

Die Erfindung betrifft ein Verfahren sowie eine Vorrichtung zum Metallschutzgasschweißen, entsprechend den Oberbegriffen der Ansprüche 1 und 11, wie z.B. aus der DE 21 2004 000048 U1 bekannt. Dabei wird eine Drahtelektrode mit einem Schweißstrom bestromt und durch einen Lichtbogen aufgeschmolzen.

Stand der Technik

Beim Metallschutzgasschweißen (MSG-Schweißen) handelt es sich um ein Lichtbogenschweißverfahren, das beispielsweise zum Auftragsschweißen, Verschweißen oder Verlöten von ein, zwei oder mehreren Werktücken aus metallischen Werkstoffen verwendet wird. Dabei wird in einer Schutzgasatmosphäre eine Drahtelektrode in Form eines Drahtes oder eines Bandes kontinuierlich nachgeführt und durch einen Lichtbogen aufgeschmolzen, der zwischen dem Werkstück und der Drahtelektrode brennt. Das Werkstück dient dabei als zweite Elektrode. Insbesondere dient das Werkstück dabei als Kathode und die Drahtelektrode als Anode. Durch Kathodeneffekte wird das Werkstück dabei zumindest teilweise aufgeschmolzen und bildet das Schmelzbad. An ihrem Ende wird die Drahtelektrode aufgeschmolzen und es bildet sich überwiegend durch den Lichtbogen ein schmelzflüssiger Tropfen. Durch verschiedene Kräfte löst sich der Tropfen von der Drahtelektrode ab und geht in das Schmelzbad über. Dieser Prozess aus Aufschmelzen der Drahtelektrode, Bildung des Tropfens, Ablösen des Tropfens und Interaktion des Tropfens mit dem Werkstück wird als Werkstoffübergang bezeichnet. Um das Ablösen der Schweißtropfen zu ermöglichen, kommt es verfahrensbedingt zu einer Überhitzung der Drahtelektrode. Dadurch kommt es zu einer Verdampfung der Drahtelektrode, wodurch große Mengen an gesundheitsschädlichen Emissionen in Form von Schweißrauch freigesetzt werden. Schweißrauch besteht aus partikelförmigen Schadstoffen (zumeist Metalloxide), die einatembar und alveolengängig sowie toxisch und/oder krebserzeugend sein können. Derartige Emissionspartikel sind besonders gesundheitsschädlich für einen Schweißer.

Da die Drahtelektrode jedoch nicht nur als Träger des Lichtbogens fungiert, sondern auch als Schweißzusatz bzw. Zusatzwerkstoff, welcher in das Schmelzbad und somit letztendlich in die Fügeverbindung übergeht, besteht eine starre Kopplung von Abschmelzleistung und Energieeintrag in das Werkstück. Die Abschmelzleistung, mittels welcher die Drahtelektrode überwiegend durch den Lichtbogen aufgeschmolzen wird, bedingt somit den Energieeintrag, also die Energie, die durch den Lichtbogen in das Werkstück eingebracht wird. Die Abschmelzleistung kann also nur in begrenztem Maße variiert werden, ohne dabei den kompletten Schweißprozess zu beeinflussen.

Zwar kann die Erhitzung der Drahtelektrode durch die Variation der Lichtbogenenergie beeinflusst werden. Beispielsweise können dafür ein Ansatz des Lichtbogens auf der Drahtelektrode (Lichtbogenansatz) oder Pulsformen des als Impulslichtbogens brennenden Lichtbogens variiert werden. Jedoch wird aufgrund der Kopplung von Abschmelzleistung und Energieeintrag die Überhitzung des Drahtes in Kauf genommen, um das Ablösen der Tropfen zu ermöglichen.

Um die Belastungen und das Gesundheitsrisiko des Schweißers zu reduzieren, können Atemmasken genutzt oder die Emissionspartikel können mittels Absaugbrennern abgesaugt werden. Absaugbrenner besitzen jedoch große Nachteile. Absaugbrenner bedingen eine unhandlichere Bauform und stark eingeschränkte Zugänglichkeit. Des Weiteren wird die Handhabung für den Schweißer erheblich erschwert. Zudem sind die Emissionspartikel häufig nicht durch einfache Filter abzuscheiden. Darüber hinaus fließen die Emissionspartikel zumeist dicht über der Werkstoffoberfläche ab und können kaum oder überhaupt nicht von dem Absaugbrenner erfasst werden.

Der Erfindung liegt daher die Aufgabe zu Grunde, das Gesundheitsrisiko für den Schweißer beim Metallschutzgasschweißen aufgrund freigesetzter Emissionspartikel zu reduzieren.

Offenbarung der Erfindung

Diese Aufgabe wird durch ein Verfahren und eine Vorrichtung zum Metallschutzgasschweißen mit den Merkmalen der unabhängigen Patentansprüche gelöst. Dabei wird eine Drahtelektrode mit einem Schweißstrom bestromt und durch einen Lichtbogen aufgeschmolzen.

Der Schweißstrom wird durch eine Schweißstromquelle bereitgestellt. Diese Schweißstromquelle wird einerseits mit der Drahtelektrode und andererseits mit dem Werkstück verbunden. Die Drahtelektrode kann sowohl positiv, als auch negativ gepolt sein. Der Schweißstrom kann sowohl Wechselstrom als auch Gleichstrom sein.

Mittels des erfindungsgemäßen MSG-Schweißverfahrens kann insbesondere ein Prozess des Auftragsschweißens durchgeführt werden. Weiterhin kann mittels des erfindungsgemäßen MSG-Schweißverfahrens auch ein Prozess des Lötens, insbesondere des Lichtbogenlötens, durchgeführt werden. Die Erfindung soll somit nicht auf das Metallschutzgasschweißen beschränkt sein, sondern ist in analoger Weise auch für das Löten, insbesondere für das Lichtbogenlöten, geeignet.

Vorteile der Erfindung

Bei herkömmlichen MSG-Schweißverfahren wird die Drahtelektrode überwiegend durch den Lichtbogen aufgeschmolzen. Das Aufschmelzen der Drahtelektrode ist somit abhängig von dem Energieeintrag des Lichtbogens in die Drahtelektrode. Die Außenseite bzw. Oberfläche der Drahtelektrode, an welcher der Lichtbogen ansetzt, wird sehr viel schneller und stärker erhitzt als das Innere der Drahtelektrode. Der Energieeintrag des Lichtbogens von der Oberfläche in das Innere der Drahtelektrode ist dabei durch Wärmeleitung begrenzt. Des Weiteren wird die Unterseite des aufgeschmolzenen Tropfens durch den Lichtbogen stärker erwärmt als dessen Oberseite. Dadurch kommt es zu einer Verdampfung der Drahtelektrode und zur Freisetzung gesundheitsschädlichen Schweißrauchs. Bei herkömmlichen MSG-Schweißverfahren kann es zu Verdampfung von bis zu 10% der Drahtelektrode kommen.

Bei herkömmlichen MSG-Schweißverfahren wird der Tatsache keine Beachtung geschenkt, dass durch den Stromfluss durch die Drahtelektrode sowie aufgrund deren elektrischen Widerstands eine Erwärmung der Drahtelektrode stattfindet. Gemäß dem Joulesches Gesetz ist eine erzeugte Wärme an einem elektrischen Widerstand proportional zu der am elektrischen Widerstand umgesetzten elektrischen Leistung sowie einer entsprechenden Zeitdauer. Als Joulesche Wärme wird dabei eine Wärmeenergie pro Zeit bezeichnet, welche durch fortwährende Verluste von elektrischer Energie in einem Leiter aufgrund der Stromstärke und des Widerstandsbelags (elektrischer Widerstand des Leiters bezogen auf dessen Länge) entsteht.

Die Joulesche Wärme hat einen erheblichen Einfluss auf die Bildung und Temperatur der Tropfen der Drahtelektrode. Die Temperatur der Drahtelektrode und der Tropfen beeinflussen wiederum das Verdampfen der Drahtelektrode und die Entstehung von Schweißrauch. Bei herkömmlichen MSG-Schweißverfahren wird die Joulesche Wärme der Drahtelektrode jedoch lediglich als Nebeneffekt des Schweißverfahrens angesehen und nicht bewusst ausgenutzt.

Durch die erfindungsgemäße Einstellung des mindestens einen Parameters, der die Joulesche Wärme der Drahtelektrode beeinflusst, wird es ermöglicht, die Joulesche Wärme der Drahtelektrode gezielt zu beeinflussen. Somit wird insbesondere das Aufschmelzen der Drahtelektrode beeinflusst. Die Joulesche Wärme bzw. die damit verbundene Erwärmung der Drahtelektrode tritt besonders stark im Inneren der Drahtelektrode auf. Durch bewusstes Ausnutzen der Jouleschen Wärme wird somit erreicht, dass die Drahtelektrode nicht nur von der Außenseite durch den Lichtbogen, sondern zusätzlich von innen durch die Joulesche Wärme erhitzt wird. Somit ist das Aufschmelzen der Drahtelektrode nicht ausschließlich von dem Energieeintrag des Lichtbogens in die Drahtelektrode abhängig und wird nicht durch die Wärmeleitung von der Oberfläche in das Innere der Drahtelektrode begrenzt. Durch die Erfindung wird es somit ermöglicht, den Tropfen sehr viel gleichmäßiger zu erhitzen. Da die Drahtelektrode somit sowohl von innen, als auch von außen erhitzt wird, muss die Drahtelektrode durch den Lichtbogen von außen nicht so stark wie bei herkömmlichen MSG-Schweißverfahren erhitzt werden.

Somit wird die maximale Temperatur auf der Tropfenunterseite reduziert und es kommt nicht zu einer bzw. zu einer sehr viel geringeren Überhitzung und unerwünschten Verdampfung der Drahtelektrode.

Durch die Erfindung wird in Folge das Freisetzen gesundheitsschädlicher Emissionen, insbesondere in Form von Schweißrauch bzw. Emissionspartikeln, erheblich reduziert. Somit wird die Arbeitssicherheit für Schweißer erhöht und das Gesundheitsrisiko für den Schweißer gesenkt. Des Weiteren behält das erfindungsgemäße MSG-Schweißverfahren die bekannten Vorteile des MSG-Schweißens bei, beispielsweise Rotationssymmetrie des MSG-Schweißbrenners. Der Stromfluss in der Drahtelektrode wird nahezu verlustfrei in Wärme umgesetzt, was die Ressourcennutzung des MSG-Schweißverfahrens effizienter gestaltet und den Wirkungsgrad und die Wirtschaftlichkeit erhöht.

Insbesondere können mittels dem erfindungsgemäßen MSG-Schweißverfahren Drähte problemlos geschweißt werden bzw. als Drahtelektrode genutzt werden, welche gemäß herkömmlicher MSG-Schweißverfahren nur schwer oder sehr umständlich genutzt werden können. Insbesondere können dabei vergleichsweise dicke Drähte problemlos geschweißt werden und als Drahtelektrode genutzt werden. Insbesondere können auch Aluminiumdrähte genutzt werden, welche aufgrund der guten elektrischen Leitfähigkeit nur eine geringe Joulesche Wärme aufzeigen, mithilfe der Erfindung problemlos genutzt werden.

In der Erfindung wird ein Stromkontaktpunkt auf der Drahtelektrode als der mindestens eine Parameter, der die Joulesche Wärme der Drahtelektrode beeinflusst, eingestellt. An dem Stromkontaktpunkt wird der Schweißstrom auf die Drahtelektrode geführt. Insbesondere kann der Stromkontaktpunkt dabei mittels eines zweckmäßigen Stromkontaktelements, beispielsweise mittels zweckmäßiger Rollen, eingestellt werden.

Bei herkömmlichen MSG-Schweißverfahren stellt der Stromübergang auf die geförderte Drahtelektrode einen nicht deterministischen Prozess dar. Dabei kann nicht präzise vorhergesagt werden, an welcher exakten Position der Schweißstrom auf die Drahtelektrode übergeht, da kein fest definierter Stromkontaktpunkt festgelegt ist. Durch diese nicht deterministische Charakteristik bei herkömmlichen MSG-Schweißverfahren kann die Joulesche Wärme der Drahtelektrode nicht präzise eingestellt und beeinflusst werden.

Im Gegensatz dazu stellt die Einstellung des Stromkontaktpunkts gemäß dieser Ausgestaltung der Erfindung (insbesondere mittels zweckmäßiger Rollen) einen deterministischer Prozess dar. Somit kann die Joulesche Wärme der Drahtelektrode präzise eingestellt und beeinflusst werden. Des Weiteren kann eine Regelung der Schweißstromquelle und des Schweißprozesses vereinfacht werden. Darüber hinaus kann das Auftreten unerwünschter kleinerer Lichtbögen zwischen der Stromkontaktdüse und der Drahtelektrode vermieden werden, welche bei nicht fest definierten Stromkontaktpunkten auftreten können. Somit kann ein Verschweißen zwischen der Drahtelektrode und der Stromkontaktdüse vermieden werden.

Gemäß einem vorteilhaften Aspekt der Erfindung wird eine freie Drahtlänge (sog. "Stickout") zwischen dem Stromkontaktpunkt und einem Ansatz des Lichtbogens auf der Drahtelektrode als der mindestens eine Parameter, der die Joulesche Wärme der Drahtelektrode beeinflusst, eingestellt. Diese Einstellung erfolgt insbesondere stufenlos. Diese freie Drahtlänge bezeichnet dabei einen stromführenden Teil der Drahtelektrode, durch welchen der Schweißstrom fließt. Die Joulesche Wärme der Drahtelektrode ist daher abhängig von dem elektrischen Widerstand dieses stromführenden Teils der Drahtelektrode.

Unterschiedliche Drahtelektroden aus unterschiedlichen Materialien und mit unterschiedlichem Durchmesser besitzen unterschiedliche Widerstände und erzeugen somit unterschiedliche Mengen an Joulescher Wärme. Gemäß herkömmlichen MSG-Schweißverfahren wird die freie Drahtlänge unabhängig von diesen Faktoren gewählt und für unterschiedliche Materialien der Drahtelektrode, Stromstärken des Schweißstroms, verwendeter Schutzgase und Lichtbogenarten identisch oder sehr ähnlich eingestellt. Zumeist ist die freie Drahtlänge bei herkömmlichen MSG-Schweißverfahren durch die Konstruktion des MSG-Schweißbrenners begrenzt.

Die freie Drahtlänge kann durch das erfindungsgemäße MSG-Schweißverfahren flexibel eingestellt und problemlos auch während des Schweißens variiert werden. Durch die Einstellung der freien Drahtlänge kann auch der Widerstand stufenlos eingestellt werden. Somit kann letztendlich die Joulesche Wärme der Drahtelektrode beeinflusst werden. Insbesondere wird mittels der der freien Drahtlänge $l$ der Widerstand R gemäß folgender Formel eingestellt:

$$R = \rho \frac{l}{A}$$

Dabei ist $A$ die Querschnittsfläche der Drahtelektrode und $\rho$ deren spezifischer elektrischer Widerstand. Insbesondere wird die freie Drahtlänge in einem Bereich zwischen 1 mm und 500 mm eingestellt. Unterschiedliche elektrische Widerstände bei verschiedenen Durchmessern und bei unterschiedlichen Materialien unterschiedlicher Drahtelektroden, welche eine unterschiedliche Joulesche Wärme erzeugen, können durch eine variable freie Drahtlänge ausgeglichen werden.

Um die freie Drahtlänge im Sinne der Erfindung einzustellen, müssen keine aufwendigen Umbaumaßnahmen an einem MSG-Schweißbrenner durchgeführt werden. Vorhandene Elemente des Schweißbrenners, wie beispielsweise eine Schutzgasdüse, eine Schutzgasabdeckung, können beibehalten werden.

Gemäß einem weiteren vorteilhaften Aspekt der Erfindung wird eine Abschmelzleistung als der Parameter, der die Joulesche Wärme der Drahtelektrode beeinflusst, eingestellt. Bei herkömmlichen MSG-Schweißverfahren ist die Abschmelzleistung starr an den Energieeintrag in das Werkstück gekoppelt. Dadurch, dass durch die Erfindung die Drahtelektrode durch Beeinflussen der Joulesche Wärme gezielt von innen und durch den Lichtbogen von außen erhitzt wird, kann die Abschmelzleistung von dem Energieeintrag in das Werkstück weitgehend entkoppelt werden. Die Abschmelzleistung, die in die Drahtelektrode eingebracht werden muss, um Tropfen aufzuschmelzen und abzulösen, muss durch die Erfindung nicht mehr alleine vom Lichtbogen eingebracht werden. Der Energieeintrag in die Drahtelektrode kann daher variabel vom Energieeintrag in das Werkstück eingestellt werden. Die Abschmelzleistung kann um ein Vielfaches gesteigert werden, ohne den Energieeintrag durch den Lichtbogen in das Werkstück zu erhöhen. Die Abschmelzleistung kann somit sehr viel variabler als bisher, weitgehend unabhängig vom Energieeintrag in den Grundwerkstoff eingestellt werden.

Insbesondere moderne hoch- und höherfeste Stähle sind temperaturempfindlich. Werden beispielsweise derartige Stähle oder andere temperaturempfindliche Materialien als Werkstücke für das MSG-Schweißverfahren genutzt, wird eine exakte Wärmeführung benötigt. Durch die Kopplung von Abschmelzleistung und Energieeintrag in das Werkstück bei herkömmlichen MSG-Schweißverfahren kann dieser Energieeintrag und somit die Wärmeführung nicht flexibel variiert werden, so dass zu viel Energie in das Werkstück eingebracht wird. Gegebenenfalls können herkömmliche MSG-Schweißverfahren daher nicht zum Schweißen von bestimmten temperaturempfindlich Materialien genutzt werden oder nur durch aufwendige Vor- und Nachwärmprozesse des Werkstücks.

Insbesondere beim Löten und beim Auftragsschweißen sollte der Grundwerkstoff möglichst wenig bzw. insbesondere gar nicht aufgeschmolzen werden. Durch die Kopplung der Abschmelzleistung mit Energieeintrag in das Werkstück bei herkömmlichen MSG-Schweißverfahren kann dieser Energieeintrag und somit die Wärmeführung nicht flexibel variiert werden, so dass zu viel Energie in das Werkstück eingebracht wird. Durch die Erfindung kann die Abschmelzleistung bei identischer Lichtbogenleistung erhöht werden, so dass die Schweißgeschwindigkeit gesteigert werden kann und folglich weniger Energie (Streckenenergie) in das Werkstück eingebracht wird. Ein identischer Effekt wird erzielt, indem die Lichtbogenleistung reduziert, aber die Abschmelzleistung über eine Erhöhung der Widerstandserwärmung bzw. der Jouleschen Wärme konstant gehalten werden kann. Bei gleich bleibender Schweißgeschwindigkeit reduziert sich auch so der Energieeintrag in das Werkstück.

Durch die Erfindung wird es möglich, den Energieeintrag in das Werkstück durch den Lichtbogen weitgehend unabhängig von der Abschmelzleistung des Zusatzwerkstoffes zu variieren. Der Energieeintrag und die Wärmeführung können somit flexibel an das zu schweißende Werkstück angepasst werden, ohne dabei das Abschmelzen der Tropfen zu beeinflussen. Das erfindungsgemäße MSG-Schweißverfahren kann somit zum Schweißen sämtlicher Materialien genutzt werden, auch für temperaturempfindliche Materialien. Aufwendige Vor- und Nachwärmprozesse des Werkstücks müssen für das erfindungsgemäße MSG-Schweißverfahren nicht durchgeführt werden. Bei temperaturempfindlichen Werkstücken kann somit die Streckenenergie gesenkt werden.

In einer bevorzugten Ausführung der Erfindung werden sämtliche Parameter, welche die Joulesche Wärme der Drahtelektrode beeinflussen, eingestellt. Somit kann die Joulesche Wärme der Drahtelektrode selbst eingestellt werden. Mittels des Stromkontaktpunkts und der damit eingestellten freien Drahtlänge $l$ kann die durch den Schweißstrom (mit der Stromstärke $I$) umgesetzte elektrische Leistung $P$ an der Drahtelektrode gemäß folgender Formel eingestellt werden:

$$P = I^2 R = I^2 \rho \frac{l}{A}$$

Die Joulesche Wärme $\Delta W$ über eine Zeitdauer $\Delta t$ ergibt sich aus dieser elektrischen Leistung:

$$\Delta W = P \Delta t = I^2 \rho \frac{l}{A} \Delta t$$

In einer bevorzugten Ausgestaltung der Erfindung wird der Parameter, der die Joulesche Wärme der Drahtelektrode beeinflusst, beim Beginn und beim Ende des Metallschutzgasschweißprozesses eingestellt. Mit der starren Kopplung der Abschmelzleistung an den Energieeintrag in das Werkstück bei herkömmlichen MSG-Schweißverfahren sind insbesondere beim Beginn und am Ende des Schweißprozesses Probleme verbunden. Zu Beginn des Schweißprozesses ist das Werkstück noch kalt und es steht zu wenig Energie zum Aufschmelzen des Werkstücks zur Verfügung. Die Drahtelektrode wird jedoch bereits mit der voreingestellten Abschmelzleistung aufgeschmolzen, wodurch die aufgeschmolzene Drahtelektrode bzw. der aufgeschmolzene Zusatzwerkstoff auf das Werkstück tropft. Hierbei entstehen häufig Risse im Werkstück oder eine ungenügende An- und Aufschmelzungen des Werkstücks. Am Ende des Schweißprozesses ist hingegen viel Energie im Werkstück, so dass oftmals Krater (Endkrater genannt) entstehen, die nur schwer gefüllt werden können. Daher müssen häufig zeitintensiv Ein- und Auslaufbleche an das Werkstück angeschweißt werden, die nur für den Beginn bzw. das Ende des Schweißprozesses benötigt werden und nach dem Schweißprozess wieder entfernt werden müssen. Durch zweckmäßiges Einstellen des Parameters, der die Joulesche Wärme beeinflusst, insbesondere des Stromkontaktpunkts und der freien Drahtlänge, werden diese Ein- und Auslaufbleche nicht mehr benötigt, da die Abschmelzleistung bei gleicher Lichtbogenleistung an die aktuelle Schweißsituation angepasst werden kann. Des Weiteren werden Risse im Werkstück, ungenügende An- und Aufschmelzungen und Krater am Anfang und am Ende des Schweißprozesses vermieden.

Darüber hinaus ergibt sich bei herkömmlichen MSG-Schweißprozessen das Problem, den Schweißprozess zu Beginn zu stabilisieren. Die Drahtelektrode bzw. der Zusatzwerkstoff wird zu Beginn des Schweißprozesses über eine relativ lange Zeitdauer erhitzt, bis sich ein Temperaturgleichgewicht eingestellt hat. Dadurch verändert sich der elektrische Widerstand der Drahtelektrode, da dieser temperaturabhängig ist. Eine Gesamtspannung wird von der Schweißstromquelle zum Einstellen der Lichtbogenlänge verwendet. Diese Gesamtspannung wird zumeist erst in der Schweißmaschine gemessen. Dieser variable elektrische Widerstand der Drahtelektrode zu Beginn des Schweißprozesses ist in einer Regelspannung inbegriffen. Durch zweckmäßige Einstellung des Stromkontaktpunkts bzw. der freien Drahtlänge beim erfindungsgemäßen MSG-Schweißverfahren kann der Lichtbogen bzw. die Lichtbogenlänge zu Schweißbeginn präzise und flexibel eingestellt werden. Der Schweißprozess kann zu dessen Beginn somit schnell stabilisiert werden. Insbesondere wird die Drahtelektrode dabei zum Messen und zur Kompensation ihres elektrischen Widerstandes kurzzeitig auf dem Werkstück aufgesetzt und ein geringer Strom aufgeprägt.

In einer weiteren bevorzugten Ausgestaltung der Erfindung wird der Parameter, der die Joulesche Wärme der Drahtelektrode beeinflusst, während des Metallschutzgasschweißprozesses, insbesondere dynamisch eingestellt. Mittels der Änderung des Parameters und somit der Jouleschen Wärme kann auf eine Änderung von Schweißbedingungen Einfluss genommen werden. Beispielsweise kann es aufgrund von geometrischen Bedingungen des Werkstücks bzw. Bauteils zu einer veränderten Wärmeableitung und somit zu einer Veränderung der notwendigen Energie kommen. Durch (dynamisches) Variieren bzw. Einstellen der Jouleschen Wärme kann derartigen Effekten entgegengewirkt werden. Weiterhin kann mittels der Jouleschen Wärme der schmelzflüssige Tropfen beeinflusst werden. Insbesondere kann dabei eine Größe des Tropfens beeinflusst werden. Während des Metallschutzgasschweißprozesses kann die Joulesche Wärme insbesondere derart eingestellt werden, dass die Größe des Tropfens an ein Spaltmaß angepasst wird. Dieses Spaltmaß kann (online) während des Metallschutzgasschweißprozesses erfasst werden, beispielsweise durch einen zweckmäßigen vorlaufenden Sensor.

Gemäß einer vorteilhaften Ausgestaltung wird der mindestens eine Parameter, der die Joulesche Wärme der Drahtelektrode beeinflusst, derart eingestellt, dass der Lichtbogen bevorzugt als ein Sprühlichtbogen oder weiter bevorzugt als ein Impulslichtbogen brennt. Insbesondere wird dabei der Stromkontaktpunkt und/oder die freie Drahtlänge entsprechend eingestellt.

Um verschiedene Abschmelzleistungen (für diverse Fügeaufgaben) mit dem MSG-Schweißverfahren realisieren zu können, können verschiedene Lichtbogenbetriebszustände eingestellt werden, insbesondere der Sprühlichtbogen oder der Impulslichtbogen. Bei herkömmlichen MSG-Schweißverfahren sind diese unterschiedlichen Lichtbogenbetriebszustände jedoch auf bestimmte Strombereiche des Schweißstroms und daher auf bestimmte Drahtvorschubgeschwindigkeiten begrenzt. Durch zweckmäßiges Einstellen des Stromkontaktpunkts bzw. der freien Drahtlänge beim erfindungsgemäßen MSG-Schweißverfahren können diese bestimmten Strombereiche bzw. Drahtvorschubgeschwindigkeiten, bei welchen die unterschiedlichen Lichtbogenbetriebsarten eingesetzt werden können, ausgeweitet werden. Ein möglicher Einsatzbereich von besonders effizienten und zweckmäßigen Lichtbogenbetriebsarten, wie insbesondere der Sprühlichtbogen und der Impulslichtbogen, kann somit erweitert werden. Ungünstige und schwer zu handhabende Lichtbogenbetriebsarten wie beispielsweise der Übergangslichtbogen werden vermieden.

Bei hohen Drahtvorschubgeschwindigkeiten geht der Werkstoffübergang von einem Impulslichtbogen in den Sprühlichtbogen über. Mit zunehmender Stromstärke wird dabei das Ende der Drahtelektrode stärker erhitzt, wodurch eine Oberflächenspannung der Drahtspitze und des Schweißtropfens abnimmt. Wird der Stromkontaktpunkt bei hohen Stromstärken des Schweißstroms derart eingestellt, dass sich die freie Drahtlänge verringert, wird die Drahtelektrode weniger stark erhitzt, wodurch der Lichtbogen auch bei hohen Schweißstromstärken als Impulslichtbogen brennt. Wird der Stromkontaktpunkt andererseits bei niedrigen Stromstärken des Schweißstroms derart eingestellt, dass sich die freie Drahtlänge vergrößert, wird die Drahtelektrode stärker erhitzt, wodurch der Lichtbogen auch schon bei niedrigen Schweißstromstärken als Impulslichtbogen brennt.

Auf analoge Weise kann der Lichtbogen bei niedrigen Schweißstromstärken, bei welchen der Lichtbogen üblicherweise als Übergangslichtbogen brennt, dazu gezwungen werden, als Sprühlichtbogen zu brennen. Dabei wird der Stromkontaktpunkt derart eingestellt, dass sich die freie Drahtlänge vergrößert, wodurch die Drahtelektrode stärker erhitzt wird und der Lichtbogen als Sprühlichtbogen brennt.

Bei sehr hohen Drahtvorschubgeschwindigkeiten geht der Werkstoffübergang von einem Sprühlichtbogen in den rotierenden Lichtbogen über, welcher nur sehr schwer zu beherrschen ist. Wird der Stromkontaktpunkt bei sehr hohen Drahtvorschubgeschwindigkeiten derart eingestellt, dass sich die freie Drahtlänge verringert, wird die Drahtelektrode weniger erhitzt, wodurch der Lichtbogen auch bei sehr hohen Drahtvorschubgeschwindigkeiten als Sprühlichtbogen brennt.

Bevorzugt wird die Drahtelektrode mit einem Heizstrom zusätzlich zum Schweißstrom bestromt. Dieser Heizstrom fließt insbesondere über einen eigenen Stromkreis (Heizstromkreis) durch die Drahtelektrode bzw. einen zweckmäßigen Teil der Drahtelektrode. Insbesondere sind der Heizstrom und der Heizstromkreis dabei unabhängig vom Schweißstrom und vom Schweißstromkreis. Durch den Heizstrom (bzw. durch die Jouleschen Wärme aufgrund des Heizstroms) wird die Drahtelektrode zusätzlich zum Schweißstrom (bzw. zusätzlich zur Jouleschen Wärme aufgrund des Schweißstroms) erhitzt. Ein derartiger Heizstrom bietet sich insbesondere bei vergleichsweise dicken Drahtelektroden mit großer Querschnittsfläche an oder bei Drahtelektroden aus Materialien mit guter (elektrischer) Wärmeleitfähigkeit, beispielsweise Aluminium.

Insbesondere wird dabei der Heizstrom als der Parameter, der die Joulesche Wärme der Drahtelektrode beeinflusst, eingestellt. Für einen derartigen Heizstromkreis wird dabei kein oder zumindest kaum zusätzlicher Platz benötigt. Des Weiteren müssen keinerlei Bauteile des Schweißbrenners bewegt werden (auch nicht das Stromkontaktelement), wenn der Heizstrom als Parameter eingestellt wird, und dennoch kann die Joulesche Wärme der Drahtelektrode beeinflusst werden. Insbesondere besteht jedoch auch die Möglichkeit, sowohl den Heizstrom als auch den Stromkontaktpunkt als Parameter, welche die Joulesche Wärme der Drahtelektrode beeinflussen, einzustellen.

Bevorzugt wird ein Gas in Form einer Gasströmung auf die Drahtelektrode geführt. Insbesondere wird die Gasströmung dabei auf einen Teil der Drahtelektrode geführt, der durch die eingestellte bzw. beeinflusste Joulesche Wärme erwärmt wird, weiter insbesondere auf den Teil der Drahtelektrode, der durch die freie Drahtlänge bestimmt ist. Durch gezieltes Zuführen der Gasströmung über die durch die Joulesche Wärme aufgeheizte Drahtelektrode, können bestimmte chemische Reaktionen gezielt ausgelöst oder unterbunden werden. Wird ein oxidierendes Gas verwendet, kann durch eine Voroxidation der Drahtelektrode eine Oberflächenspannung der Tropfen verringert werden. Zudem können Rückstände auf der Drahtelektrode verbrannt werden. Wird ein inertes oder reduzierendes Gas verwendet, werden bestimmte chemische Reaktionen vermieden, wodurch sich die Oberflächenspannung am Tropfen erhöht.

Die Erfindung betrifft weiterhin eine Vorrichtung zum Metallschutzgasschweißen. Ausgestaltungen dieser erfindungsgemäßen Vorrichtung ergeben sich aus der obigen Beschreibung des erfindungsgemäßen Verfahrens in analoger Art und Weise. Die erfindungsgemäße Vorrichtung zum Metallschutzgasschweißen ist dazu eingerichtet, mindestens einen Parameter, der die Joulesche Wärme der Drahtelektrode beeinflusst, gemäß einer Ausgestaltung des erfindungsgemäßen Verfahrens einzustellen.

In einer bevorzugten Ausgestaltung weist die erfindungsgemäße Vorrichtung zum Metallschutzgasschweißen ein Stromkontaktelement auf, das dazu eingerichtet ist, den Stromkontaktpunkt bzw. dessen Ort auf der Drahtelektrode präzise und insbesondere stufenlos einzustellen. Insbesondere kann der Schweißstrom mittels des Stromkontaktelements stets an einem definierten Punkt auf die Drahtelektrode überführt werden. Insbesondere wird mittels des Stromkontaktelements auch die freie Drahtlänge eingestellt. Somit werden über das Stromkontaktelement insbesondere auch die Abschmelzleistung und die Joulesche Wärme eingestellt.

Das Stromkontaktelement kann dabei beispielsweise als eine herkömmliche Stromkontaktdüse mit einem oder mehreren Schleifkontakten ausgebildet sein. Das Stromkontaktelement kann beispielsweise auch derart ausgebildet sein, dass es keine Schleifkontakte zum Überführen des Schweißstroms auf die Drahtelektrode aufweist.

Das Stromkontaktelement wird insbesondere mechanisch bewegt und eingestellt (beispielsweise manuell oder motorisch). Diese mechanische Einstellung bietet sich insbesondere für ein manuelles MSG-Schweißverfahren an. Alternativ oder zusätzlich kann das Stromkontaktelement auch elektrisch eingestellt werden. Dies bietet sich insbesondere bei automatisierten MSG-Schweißverfahren an. Wird beispielsweise ein zusätzlicher Heizstromkreis genutzt, um die Drahtelektrode zusätzlich zu dem Schweißstrom zu bestromen, kann das Stromkontaktelement auch fest und unbeweglich ausgebildet sein.

Die erfindungsgemäße Vorrichtung kann Führungselemente, beispielsweise Hülsen, Rohre, Rollen, Drahtseele umfassen, um die Drahtelektrode zu führen. Insbesondere bieten sich solche Führungselemente bei großen freien Drahtlängen an, um eine Krümmung der Drahtelektrode zu kompensieren sowie die durch die Joulesche Wärme erhitzte Drahtelektrode, welche eine geringere Steifigkeit aufweist, zu führen. Derartige Führungselemente sind insbesondere aus Materialien ausgebildet, an denen keine Schweißspritzer anhaften, beispielsweise u.a. keramische Materialien. Insbesondere sind die Führungselemente keine elektrischen Leiter.

In einer vorteilhaften Ausgestaltung weist das Stromkontaktelement wenigstens eine Rolle auf, die mit der Drahtelektrode in Berührung steht. Über diese Rolle bzw. Rollen wird insbesondere der Schweißstrom auf die Drahtelektrode geführt. Durch die Rolle entsteht ein punktueller Stromkontaktpunkt, welcher im Vergleich zu einem Schleifkontakt fest definiert ist und sich nicht verändert. Schleifkontakte verschleißen bei herkömmlichen MSG-Schweißverfahren durch die Relativbewegung zwischen Drahtelektrode und Stromkontaktdüse sehr leicht, wodurch sich die Bedingungen des Schweißprozesses ständig verändern. Schleifkontakte müssen daher häufig ausgetauscht werden. Ein Zeitpunkt des Versagens eines Schleifkontakts kann nur schwer vorhergesagt werden. Rollen bzw. rollende Kontakte besitzen hingegen den erheblichen Vorteil, dass kaum Verschleiß entsteht, da keine Relativbewegung stattfindet. Daher sind keine und nur äußerst seltene Wechsel der Rollen notwendig. Durch Rollen bzw. rollende Kontakte kann es nicht oder nur schwer zum Festbrennen der Drahtelektrode bzw. zu einem Verschweißen der Drahtelektrode und der Rolle kommen. Somit kann es nicht zum Auftreten einer plötzlichen Gegenkraft kommen, die zum Ausknicken der Drahtelektrode führen kann.

Der punktuelle Stromkontaktpunkt ist dabei eine punktuelle Berührstelle, an welcher die Rolle mit der Drahtelektrode in Kontakt steht bzw. diese berührt. Mittels derartiger Rollen als Stromkontaktelement kann somit insbesondere dieser Stromkontaktpunkt präzise eingestellt werden. Somit kann das Auftreten unerwünschter kleiner Lichtbögen verhindert werden, da dieser punktuelle Stromkontaktpunkt stets mit der Drahtelektrode in Kontakt steht. Des Weiteren wird die Regelung des MSG-Schweißverfahrens erheblich vereinfacht und präzisiert. Durch die Einstellung der Widerstanderwärmung bzw. der Jouleschen Wärme kann der Stromfluss in der Drahtelektrode nahezu verlustfrei in Wärme umgesetzt werden, was die Ressourcennutzung des MSG-Schweißverfahrens effizienter gestaltet und den Wirkungsgrad und die Wirtschaftlichkeit erhöht. Durch die präzise Einstellung des Stromkontaktpunkts und die präzise Regelung des Schweißprozesses wird auch eine Vollmechanisierung oder Automatisierung des MSG-Schweißverfahrens vereinfacht.

Vorzugsweise weist das Stromkontaktelement eine oder mehrere Schleifkontakte auf, die auf der der Drahtelektrode abgewandten Seite mit der Rolle oder den Rollen in Berührung stehen. Über diese Schleifkontakte wird der Schweißstrom auf die wenigstens einen Rolle geführt. Diese Schleifkontakte werden insbesondere durch mechanische Federn oder ähnliche Nachstellmechanismen gegen die Rollen gedrückt. Dadurch können die Rolle bzw. die Rollen mit einer definierten Kraft auf die Drahtelektrode geführt werden.

Bevorzugt wird mittels der Rolle bzw. Rollen die Drahtvorschubgeschwindigkeit der Drahtelektrode bestimmt. Dafür stehen die Rolle bzw. Rollen mit einer Messeinheit in Wirkverbindung. Die Geschwindigkeit, mit welcher sich die Rolle bzw. die Rollen sich drehen, korreliert mit der Drahtvorschubgeschwindigkeit. Die Messeinheit bestimmt daher eine Drehgeschwindigkeit der Rolle bzw. der Rollen und bestimmt daraus die Drahtvorschubgeschwindigkeit.

Gemäß einer bevorzugten Ausgestaltung weist die erfindungsgemäße Vorrichtung ein kaskadiertes Stromkontaktelement auf. Ein kaskadiertes Stromkontaktelement weist mehrere hintereinander angeordnete herkömmliche Stromkontaktdüsen und/oder mehrere hintereinander angeordnete Stromkontaktelemente gemäß obiger Beschreibung auf, die jeweils durch einen Isolator voneinander getrennt sind. Mittels eines kaskadierten Stromkontaktelements kann eine optimale Führung der erhitzten Drahtelektrode gewährleistet werden.

Die einzelnen Stromkontaktrohrelemente bzw. Stromkontaktdüsen können über Leistungsschalter und/oder über einen beweglichen Schleifkontakt bestromt werden. Der Innenddurchmesser des Isolators (insbesondere Keramik) entspricht dabei im Wesentlichen dem Innendurchmesser der Stromkontaktrohrelemente bzw. Stromkontaktdüsen. Die Drahtelektrode wird somit optimal geführt, auch bei extremen Längen zwischen dem Stromkontaktpunkt und dem Lichtbogenansatz.

Die Erfindung und ihre Vorteile werden nun anhand der beigefügten Zeichnung weiter erläutert. In dieser zeigt

Figur 1    schematisch eine Ausgestaltung einer erfindungsgemäßen Vorrichtung zum Metallschutzgasschweißen, die dazu eingerichtet ist, eine Ausführungsform eines erfindungsgemäßen Verfahrens durchzuführen,

Figur 2    schematisch eine Ausgestaltung eines Stromkontaktelements einer erfindungsgemäßen Vorrichtung zum Metallschutzgasschweißen,

Figur 3    schematisch eine bevorzugte Ausgestaltung eines Stromkontaktelements einer erfindungsgemäßen Vorrichtung zum Metallschutzgasschweißen in einer perspektivischen Seitenansicht,

Figur 4    schematisch eine weitere bevorzugte Ausgestaltung eines Stromkontaktelements einer erfindungsgemäßen Vorrichtung zum Metallschutzgasschweißen in einer perspektivischen Seitenansicht,

Figur 5    schematisch eine weitere Ausgestaltung einer erfindungsgemäßen Vorrichtung zum Metallschutzgasschweißen und

Figur 6    schematisch eine weitere bevorzugte Ausgestaltung eines Stromkontaktelements einer erfindungsgemäßen Vorrichtung zum Metallschutzgasschweißen.

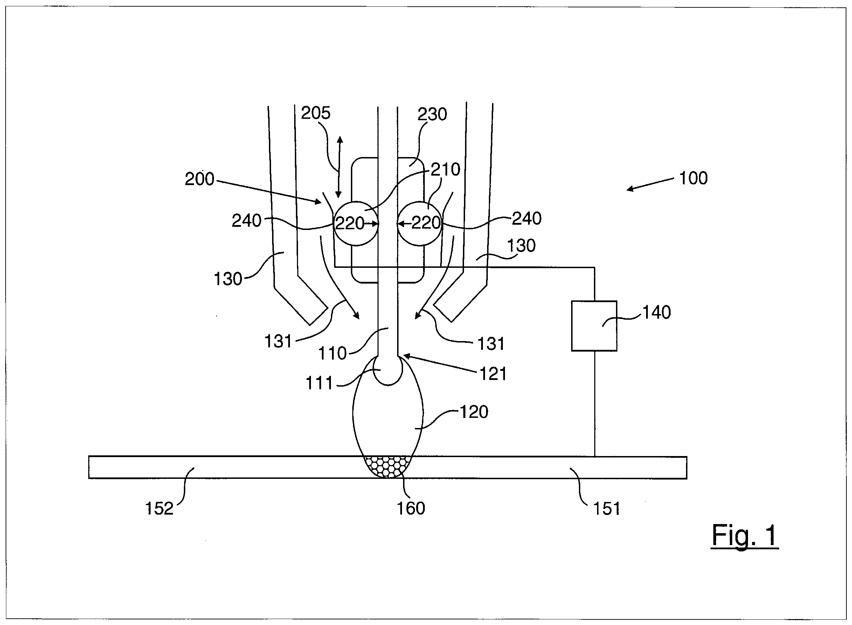

In Figur 1 ist eine bevorzugte Ausgestaltung einer erfindungsgemäßen Vorrichtung zum Metallschutzgasschweißen als ein MSG-Schweißbrenner schematisch dargestellt und mit 100 bezeichnet.

Mittels des MSG-Schweißbrenners 100 wird durch einen Fügevorgang ein erstes Werkstück 151 mit einem zweiten Werkstück 152 verschweißt. Das MSG-Schweißgerät 100 weist eine stromführende Drahtelektrode 110 in Form eines Drahts auf. Der MSG-Schweißbrenner 100 weist ein Stromkontaktelement 200 auf.

Mittels des Stromkontaktelements 200 wird ein Schweißstrom auf die Drahtelektrode 110 geführt. Der Schweißstrom wird von einer Schweißstromquelle 140 bereitgestellt. Die Schweißstromquelle 140 ist elektrisch mit dem Stromkontaktelement 200 und dem ersten Werkstück 151 verbunden (schematisch dargestellt). Durch den Schweißstrom brennt ein Lichtbogen 120 zwischen der Drahtelektrode 110 und dem ersten Werkstück 151.

Mittels des Stromkontaktelements 200 kann ein Stromkontaktpunkt präzise eingestellt werden, über den der Schweißstrom auf die Drahtelektrode 110 fließt bzw. überführt wird. Das Stromkontaktelement 200 weist eine Führung 230 auf. An dieser Führung sind Rollen 210 angebracht. Diese Rollen 210 stehen mit der Drahtelektrode 110 in Verbindung. Die Rollen 210 berühren die Drahtelektrode 110 dabei jeweils an einem definierten Punkt 220. Dieser definierte Punkt 220 ist der Stromkontaktpunkt 220, an welchem der Schweißstrom auf die Drahtelektrode 110 geführt wird. Die Rollen 210 können beispielsweise mittels Schleifkontakte 240 mit der Schweißstromquelle 140 verbunden sein und durch diese an die Drahtelektrode 110 gedrückt werden.

Das Stromkontaktelement 200 kann entlang der Drahtelektrode 110 verschoben werden, angedeutet durch den Doppelpfeil 205. Somit kann die Position des Stromkontaktpunkts 220 auf der Drahtelektrode 110 eingestellt werden. Das Verschieben des Stromkontaktelements 200 und somit das Einstellen des Stromkontaktpunkts 220 kann manuell, pneumatisch und/oder motorisch erfolgen.

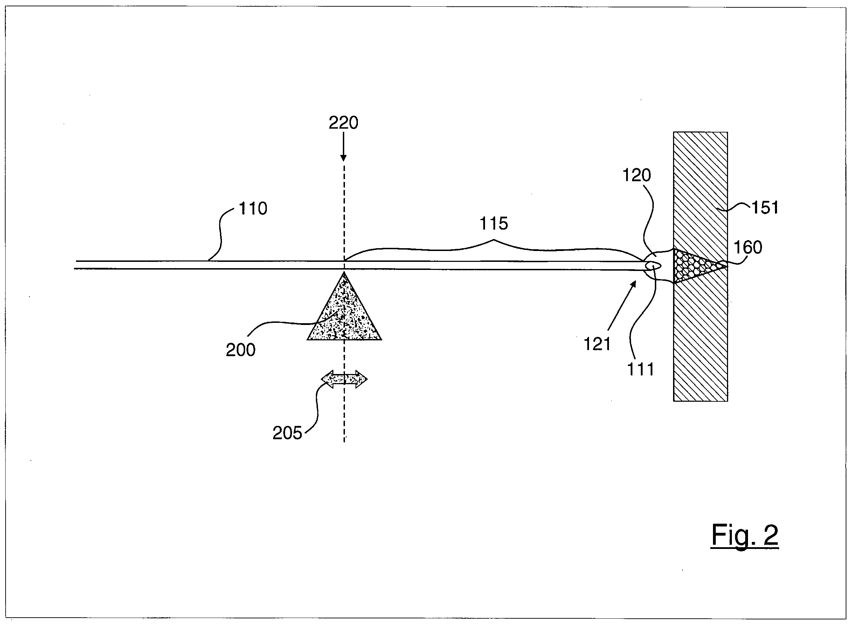

Mittels der Position des Stromkontaktpunkts 220 auf der Drahtelektrode 110 kann auch eine freie Drahtlänge 115 der Drahtelektrode 110 eingestellt werden. Zur Verdeutlichung der freien Drahtlänge 115 ist in Figur 2 ein Stromkontaktelement 200 stark schematisiert dargestellt. Die freie Drahtlänge 115 ist dabei die Länge zwischen dem Stromkontaktpunkt 220 und einem Lichtbogenansatz 121. Der Lichtbogenansatz 121 ist dabei eine Position auf der Drahtelektrode, an welcher der Lichtbogen 120 auf der Drahtelektrode 110 ansetzt. Mittels des Stromkontaktelements 200 kann die freie Drahtlänge 115 stufenlos eingestellt werden.

Durch die präzise Einstellung des Stromkontaktpunkts 220 bzw. der freien Drahtlänge 115 wird eine Joulesche Wärme eingestellt. Die Joulesche Wärme ist dabei die Wärmeenergie pro Zeit, um welche die Drahtelektrode 110 aufgrund ihres elektrischen Widerstands und dem Schweißstrom erhitzt wird. Durch die Joulesche Wärme wird die Drahtelektrode 110 zu einem großen Teil in ihrem Inneren erhitzt. Durch den Lichtbogen 120 wird die Drahtelektrode 110 von außen erhitzt, insbesondere in der Nähe des Lichtbogenansatzes 121. Durch den Energieeintrag in die Drahtelektrode 110 durch die Joulesche Wärme und durch den Lichtbogen 120 wird die Drahtelektrode 110 aufgeschmolzen und es bildet sich ein schmelzflüssiger Tropfen 111.

Der Tropfen 120 löst sich letztendlich von der Drahtelektrode 110, geht in ein Schmelzbad 160 über und bildet die Schweißnaht (Fügeverbindung zwischen den Werkstücken 151 und 152). Die Drahtelektrode 110 wird dabei kontinuierlich mit einer bestimmten Drahtvorschubgeschwindigkeit nachgeführt.

Durch die präzise Einstellung des Stromkontaktpunkts 220, die Einstellung der freien Drahtlänge 115 und die gezielte Einstellung der Jouleschen Wärme kann die Drahtelektrode 110 effektiver aufgeschmolzen werden als bei herkömmlichen MSG-Schweißverfahren und die Bildung des Tropfens 111 kann erheblich vereinfacht werden. Der Tropfen 111 wird homogen erhitzt, von innen durch die Joulesche Wärme und von außen durch den Lichtbogen 120. Somit wird eine maximale Temperatur des Tropfens 111 reduziert. Es ist nicht nötig, die Drahtelektrode 110 zu überhitzen, um das Bilden und Ablösen des Tropfens 111 zu ermöglichen. Durch die Erfindung werden Emissionen, insbesondere in Form von Schweißrauch, reduziert. Gesundheitsrisiken beim MSG-Schweißen werden reduziert und die Arbeitssicherheit wird erhöht.

Das MSG-Schweißgerät 100 gemäß Figur 1 weist weiterhin insbesondere eine Gasdüse 130 auf, um Gas in Form einer Gasströmung auf die Drahtelektrode zu führen, angedeutet durch das Bezugszeichen 131. Insbesondere wird die Gasströmung 131 dabei auf den Teil der Drahtelektrode 110 geführt, der durch die freie Drahtlänge bestimmt ist. Das MSG-Schweißgerät 100 kann zusätzlich noch weiter Düsen aufweisen, beispielsweise eine Schutzgasdüse zum Zuführen eines Schutzgases.

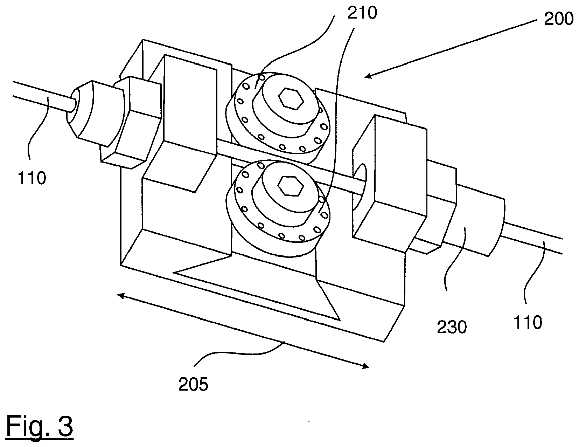

In Figur 3 ist eine bevorzugte Ausgestaltung eines Stromkontaktelement 200 gemäß Figur 1 in einer perspektivischen Seitenansicht schematisch dargestellt. Analog zu Figur 1 weist das Stromkontaktelement 200 gemäß Figur 3 zwei Rollen 210 auf, die auf einer Führung 230 angebracht sind. Die Drahtelektrode 110 kann in die Führung 230 eingeführt werden. Die Rollen berühren die Drahtelektrode dabei in dem definierten Stromkontaktpunkt. Die Führung 230 und somit das Stromkontaktelement 200 können entlang der Drahtelektrode 110 entlang des Doppelpfeils 205 verschoben werden.

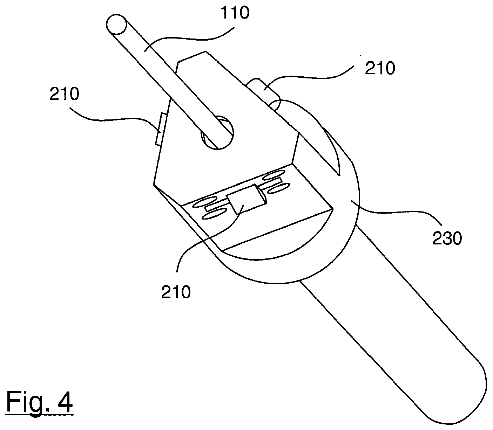

Eine weitere bevorzugte Ausgestaltung einer Stromkontaktelement 200 ist in Figur 4 in einer perspektivischen Seitenansicht schematisch dargestellt. Das Stromkontaktelement 200 gemäß Figur 4 weist dabei drei Rollen 200 auf, welche an einer Führung 230 angebracht sind.

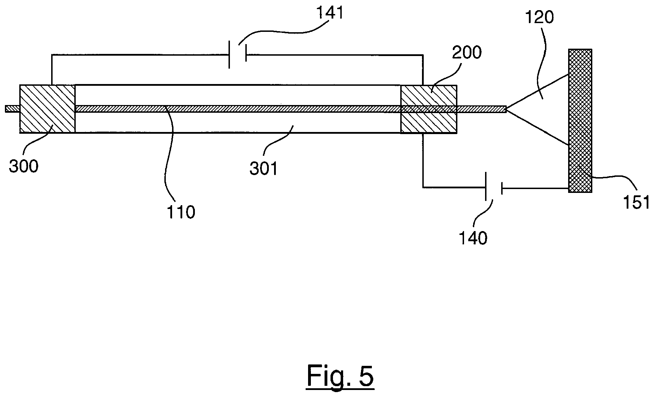

In Figur 5 ist eine weitere bevorzugte Ausgestaltung einer erfindungsgemäßen MSG-Schweißbrenners schematisch dargestellt. Der MSG-Schweißbrenner weist dabei ein Stromkontaktelement 200 auf, welches mit einem Pol der Schweißstromquelle 140 elektrisch verbunden ist. Der andere Pol der Stromquelle 140 ist mit dem ersten Werkstück 151 verbunden. Zusätzlich zu diesem Schweißstromkreis weist diese Ausgestaltung des erfindungsgemäßen MSG-Schweißbrenners einen zweiten Stromkreis, einen so genannten Heizstromkreis, auf. Dazu weist der MSG-Schweißbrenner ein zweites Stromkontaktelement 300 auf. Dieses zweite Stromkontaktelement 300 kann analog zu dem Stromkontaktelement 200 oder auch andersartig ausgestaltet sein. Das erste Stromkontaktelement 200 und das zweite Stromkontaktelement 300 sind über eine Heizstromquelle 141 elektrisch miteinander verbunden. Ein Heizstrom fließt somit über den Teil der Drahtelektrode 110 zwischen ersten und zweiten Stromkontaktelement 200 und 300. Durch den Heizstrom wird die Drahtelektrode somit zusätzlich zu dem Schweißstrom erhitzt. Die Drahtelektrode ist in diesem Beispiel von einem Isolator 301 ummantelt, der die Stromkontaktelemente 200 und 300 elektrisch trennt.

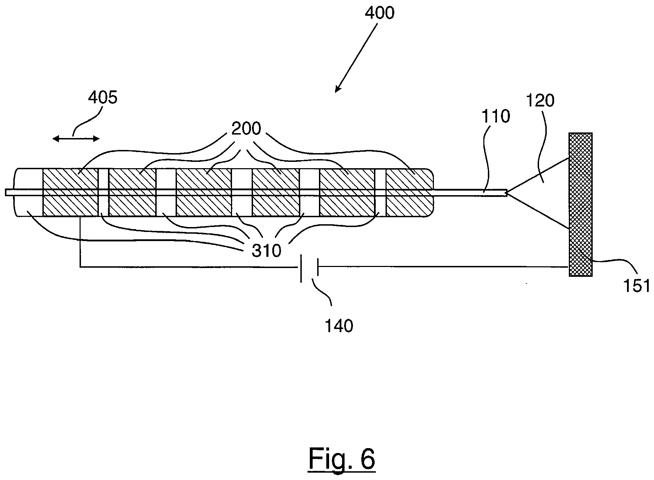

In Figur 6 ist eine weitere bevorzugte Ausgestaltung eines Stromkontaktelements schematisch dargestellt. Das Stromkontaktelement ist dabei als ein kaskadiertes Stromkontaktelement 400 ausgebildet. Das kaskadierte Stromkontaktelement 400 weist dabei mehrere hintereinander angeordnete Stromkontaktelemente 200 auf, die insbesondere gemäß obiger Beschreibung ausgestaltet sind. Die einzelnen Stromkontaktelemente 200 sind dabei jeweils durch einen Isolator 310 voneinander getrennt.

Eines der Stromkontaktelemente 200 ist, insbesondere mittels eines Schleifkontakts, mit der Schweißstromquelle 141 elektrisch verbunden. Dieser Schleifkontakt kann flexibel entlang des kaskadierten Stromkontaktelements 400 verschoben werden, angedeutet durch den Doppelpfeil 405. Somit kann flexibel variiert werden, welches der Stromkontaktelemente 200 mit der der Schweißstromquelle 141 elektrisch verbunden ist.

Hierbei tritt der Schleifkontakt in der Regel mit einem Stromkontaktelement 200 des kaskadierten Stromkontaktelements 400 in Kontakt. Der Schleifkontakt kann auch mit maximal mit drei Stromkontaktelementen 200 des kaskadierten Stromkontaktelements 400 gleichzeitig in Kontakt treten und diese maximal drei Stromkontaktelemente 200 gleichzeitig mit der Schweißstromquelle 141 elektrisch verbinden.

Es ist auch möglich, keinen Schleifkontakt zu nutzen und alle Stromkontaktelemente 200 des kaskadierten Stromkontaktelements 400 mit der Schweißstromquelle 141 elektrisch zu verbinden. Dabei können insbesondere bestimmte Stromkontaktelemente 200 (insbesondere mittels Leistungsschaltern) zugeschaltet werden und die übrigen Stromkontaktelemente 200 können (mittels der Leistungsschalter) von der Schweißstromquelle 140 getrennt werden.

Bezugszeichenliste

| 100 | MSG-Schweißbrenner |
| 110 | Drahtelektrode |
| 111 | Tropfen |
| 115 | freie Drahtlänge |
| 120 | Lichtbogen |
| 121 | Lichtbogenansatz |
| 130 | Gasdüse |

| 131 | Gasströmung |
|-----|-------------|
| 140 | Schweißstromquelle |
| 141 | Heizstromquelle |
| 151 | erstes Werkstück |
| 152 | zweites Werkstück |
| 160 | Schmelzbad |
| 200 | Stromkontaktelement |
| 205 | Doppelpfeil |
| 210 | Rollen |
| 220 | Stromkontaktpunkt |
| 230 | Führung |
| 240 | Schleifkontakte |
| 300 | zweites Stromkontaktelement |
| 301 | Isolator |
| 310 | Isolator |
| 400 | kaskadiertes Stromkontaktelement |
| 405 | Doppelpfeil |

**Patentansprüche**

1. Verfahren zum Metallschutzgasschweißen, wobei eine Drahtelektrode (110) mit einem Schweißstrom bestromt wird und die Drahtelektrode (110) durch einen Lichtbogen (120) aufgeschmolzen wird, wobei ein Stromkontaktpunkt (220) auf der Drahtelektrode (110) vorgesehen ist, an welchem der Schweißstrom auf die Drahtelektrode (110) geführt wird, **dadurch gekennzeichnet, dass** mittels des Stromkontaktpunkts (220) eine freie Drahtlänge (115) zwischen dem Stromkontaktpunkt (220) und einem Ansatz (121) des Lichtbogens (120) auf der Drahtelektrode (110) in Abhängigkeit von einer Joulesche Wärme der Drahtelektrode (100) eingestellt wird.

2. Verfahren nach Anspruch 1, wobei die freie Drahtlänge (115) in einem Bereich zwischen 1 mm und 500 mm eingestellt wird.

3. Verfahren nach Anspruch 1 oder 2, wobei mittels des Stromkontaktpunkts (220) eine Abschmelzleistung eingestellt wird.

4. Verfahren nach einem der vorstehenden Ansprüche, wobei eine durch den Schweißstrom umgesetzte elektrische Leistung in Abhängigkeit von der Joulesche Wärme der Drahtelektrode (110) eingestellt werden.

5. Verfahren nach einem der vorstehenden Ansprüche, wobei die freie Drahtlänge (115) beim Beginn und beim Ende des Metallschutzgasschweißprozesses eingestellt wird.

6. Verfahren nach einem der vorstehenden Ansprüche, wobei es bildet sich durch den Lichtbogen (120) ein schmelzflüssiger Tropfen und wobei ein vorlaufender Sensor während des Metallschutzgasschweißprozesses, insbesondere dynamisch eingestellt wird, sodass die Größe des Tropfens an ein Spaltmaß angepasst wird.

7. Verfahren nach einem der vorstehenden Ansprüche, wobei die freie Drahtlänge (115) derart eingestellt wird, dass der Lichtbogen (120) als ein Sprühlichtbogen brennt.

8. Verfahren nach einem der vorstehenden Ansprüche, wobei die freie Drahtlänge (115)derart eingestellt wird, dass der Lichtbogen (120) als ein Impulslichtbogen brennt.

9. Verfahren nach einem der vorstehenden Ansprüche, wobei die Drahtelektrode (110) mit einem Heizstrom zusätzlich zum Schweißstrom bestromt wird.

10. Verfahren nach einem der vorstehenden Ansprüche, wobei ein Gas in Form einer Gasströmung (131) auf die Drahtelektrode (110) geführt wird.

11. Vorrichtung (100) zum Metallschutzgasschweißen, aufweisend eine mit einem Schweißstrom bestromte Drahtelektrode (110), wobei ein Stromkontaktelement (200) auf der Drahtelektrode (110), an welchem der Schweißstrom auf die Drahtelektrode (110) geführt wird, eingerichtet ist, **dadurch gekennzeichnet, dass** das Stromkontaktelement (200) entlang der Drahtelektrode (110) verschoben werden kann, um durch diese Einstellung eine Joulesche Wärme der Drahtelektrode (100) zu beeinflussen.

12. Vorrichtung nach Anspruch 11, wobei das Stromkontaktelement (200) wenigstens eine Rolle (210) aufweist, die mit der Drahtelektrode (110) in Berührung steht und über die der Schweißstrom auf die Drahtelektrode (110) geführt wird.

13. Vorrichtung nach Anspruch 12, wobei das Stromkontaktelement (200) einen Schleifkontakt (240) aufweist, der mit der wenigstens einen Rolle (210) in Berührung steht und über den die der Schweißstrom auf die wenigstens einen Rolle (220) geführt wird.

14. Vorrichtung nach Anspruch 12 oder 13, wobei die wenigstens eine Rolle (210) mit einer Messeinheit in Wirkverbindung steht, die um eine Drahtvorschubgeschwindigkeit der Drahtelektrode (110) zu bestimmen.

15. Vorrichtung nach einem der Ansprüche 11 bis 14, aufweisend ein kaskadiertes Stromkontaktelement (400), wobei Stromkontaktelemente (200) und/oder Stromkontaktdüsen hintereinander angeordnet und jeweils durch Isolatoren (301, 310) voneinander getrennt sind.

## Claims

1. Method for metal gas-shielded arc welding, wherein a welding current is passed through a wire electrode (110) and the wire electrode (110) is melted by an arc (120), wherein a current contact point (220) at which the welding current is directed towards the wire electrode (110) is provided on the wire electrode (110),
**characterized in that**
a free length of wire (115) between the current contact point (220) and a striking point (121) of the arc (120) on the wire electrode (110) is set by means of the current contact point (220) in dependence on a Joulean heat of the wire electrode (100).

2. Method according to Claim 1, wherein the free length of wire (115) is set in a range between 1 mm and 500 mm.

3. Method according to Claim 1 or 2, wherein a melt-off efficiency is set by means of the current contact point (220).

4. Method according to one of the preceding claims, wherein an electrical power converted by the welding current is set in dependence on the Joulean heat of the wire electrode (110).

5. Method according to one of the preceding claims, wherein the free length of wire (115) is set at the beginning and end of the metal gas-shielded arc welding process.

6. Method according to one of the preceding claims, wherein a molten drop is formed by the arc (120) and wherein a leading sensor is set, in particular is dynamically set, during the metal gas-shielded arc welding process, so that the size of the drop is adapted to a gap dimension.

7. Method according to one of the preceding claims, wherein the free length of wire (115) is set in such a way that the arc (120) burns as a sprayed arc.

8. Method according to one of the preceding claims, wherein the free length of wire (115) is set in such a way that the arc (120) burns as a pulsed arc.

9. Method according to one of the preceding claims, wherein a heating current is passed through the wire electrode (110) in addition to the welding current.

10. Method according to one of the preceding claims, wherein a gas in the form of a gas flow (131) is directed towards the wire electrode (110).

11. Device (100) for metal gas-shielded arc welding, having a wire electrode (110) through which a welding current is passed, wherein a current contact element (200) at which the welding current is directed towards the wire electrode (110) is set up on the wire electrode (110),
**characterized in that** the current contact element (200) can be displaced along the wire electrode (110) in order to influence a Joulean heat of the wire electrode (100) by this setting.

12. Device according to Claim 11, wherein the current contact element (200) has at least one roller (210), which is in contact with the wire electrode (110) and by way of which the welding current is directed towards the wire electrode (110).

13. Device according to Claim 12, wherein the current contact element (200) has a sliding contact (240), which is in contact with the at least one roller (210) and by way of which the the welding current is directed towards the at least one roller (220).

14. Device according to Claim 12 or 13, wherein the at least one roller (210) is in operative connection with a measuring unit which for determining a wire feed rate of the wire electrode (110).

15. Device according to one of Claims 11 to 14, having a cascaded current contact element (400), wherein current contact elements (200) and or current contact nozzles are arranged one behind the other and are respectively separated from one another by insulators (301, 310).

## Revendications

1. Procédé de soudage à l'arc sous gaz protecteur, dans lequel un fil-électrode (110) est alimenté en courant de soudage et le fil-électrode (110) est fondu par un arc (120), dans lequel il est prévu sur le fil-électrode (110) un point de contact de courant (220) au niveau duquel le courant de soudage est délivré au fil-électrode (110),
**caractérisé en ce qu'**une longueur de fil libre (115) est réglée entre le point de contact de courant (220) et une extension (121) de l'arc (120) sur le fil électrode (110) au moyen du point de contact de courant (220), en fonction de la chaleur produite par effet Joule par le fil-électrode (100).

2. Procédé selon la revendication 1, dans lequel la longueur de fil libre (115) est réglée dans une plage comprise entre 1 mm et 500 mm.

3. Procédé selon la revendication 1 ou 2, dans lequel une vitesse de dépôt est réglée au moyen du point de contact de courant (220).

4. Procédé selon l'une des revendications précédentes, dans lequel une puissance électrique convertie par le courant de soudage est réglée en fonction de la chaleur produite par effet Joule par le fil-électrode (110).

5. Procédé selon l'une des revendications précédentes, dans lequel la longueur de fil libre (115) est réglée au début et à la fin du processus de soudage sous gaz protecteur.

6. Procédé selon l'un des revendications précédentes, dans lequel une goutte liquide fondue est formée par l'arc (120) et
dans lequel un capteur amont est réglé, en particulier dynamiquement, pendant le processus de soudage par gaz protecteur, de manière à ce que la taille de la goutte soit adaptée à une dimension d'entrefer.

7. Procédé selon l'une des revendications précédentes, dans lequel la longueur de fil libre (115) est réglée de manière à ce que l'arc (120) se consume sous la forme d'un arc à fusion en pluie.

8. Procédé selon l'une des revendications précédentes, dans lequel la longueur de fil libre (115) est réglée de manière à ce que l'arc (120) se consume sous la forme d'un arc pulsé.

9. Procédé selon l'une des revendications précédentes, dans lequel le fil-électrode (110) est alimenté par un courant de chauffage en plus du courant de soudage.

10. Procédé selon l'une des revendications précédentes, dans lequel un gaz sous la forme d'un courant de gaz (131) est délivré sur le fil-électrode (110).

11. Dispositif (100) de soudage à l'arc sous gaz protecteur, comportant un fil-électrode (110) alimenté par un courant de soudage,
dans lequel un élément de contact de courant (200) est mis en place sur le fil-électrode (110), au niveau duquel le courant de soudage est délivré au fil-électrode (110), **caractérisé en ce que** l'élément de contact de courant (200) peut être déplacé le long du fil-électrode (110) pour agir au moyen dudit réglage sur la chaleur produite par effet Joule par le fil-électrode (100).

12. Dispositif selon la revendication 11, dans lequel l'élément de contact de courant (200) présente au moins un rouleau (210) qui est en contact avec le fil-électrode (110) et par l'intermédiaire duquel le courant de soudage est délivré au fil-électrode (110).

13. Dispositif selon la revendication 12, dans lequel l'élément de contact de courant (200) comporte un contact coulissant (240) qui est en contact avec ledit au moins un rouleau (210) et par l'intermédiaire duquel le le courant de soudage est délivré audit au moins un rouleau (220) .

14. Dispositif selon la revendication 12 ou 13, dans lequel ledit au moins un rouleau (210) est fonctionnellement relié à une unité de mesure qui pour déterminer une vitesse de transport du fil-électrode (110).

15. Dispositif selon l'une des revendications 11 à 14, comportant un élément de contact de courant (400) connecté en cascade, dans lequel des éléments de contact de courant (200) et/ou des buses de contact de courant sont disposés les uns derrière les autres et sont respectivement séparés les uns des autres par des isolateurs (301, 310).

EP 2 810 733 B1

<u>Fig. 1</u>

EP 2 810 733 B1

Fig. 2

Fig. 3

Fig. 4

Fig. 5

<u>Fig. 6</u>

EP 2 810 733 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 212004000048 U1